Europäisches Patentamt

European Patent Office

Office européen des brevets

(11) Veröffentlichungsnummer: **0 380 800**
**A2**

# (12) EUROPÄISCHE PATENTANMELDUNG

(21) Anmeldenummer: **89123380.1**

(51) Int. Cl.5: **G01M 11/00**

(22) Anmeldetag: **18.12.89**

(30) Priorität: **01.02.89 SU 4690295**

(43) Veröffentlichungstag der Anmeldung:
**08.08.90 Patentblatt 90/32**

(84) Benannte Vertragsstaaten:
**AT BE CH DE FR GB LI NL SE**

(71) Anmelder: **LENINGRADSKOE OTDELENIE TSENTRALNOGO NAUCHNO-ISSLEDO-VATELSKOGO INSTITUTA SVYAZI (LONIIS)**
**ulitsa Varshavskaya, 11**
**Leningrad(SU)**

(72) Erfinder: **Bukhshtab, Mikhail Alexandrovich**
**ulitsa Novoselova, 41, kv. 21**
**Leningrad(SU)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **Verfahren zur Ermittlung optischer Verluste in gekoppelten Lichtleitern im reflektierten Licht.**

(57) Die Verluste in einem beliebigen i-ten Lichtleiter (z. B. 5) aus k in einer optischen Übertragungsleitung aneinandergekoppelten Lichtleitern werden ohne diese dabei auseinanderzutrennen durch die Einkopplung von Sendeimpulsen in die Reihe der zu messenden Lichtleiter (5 - 7) über einen Leerlauflichtleiter (4), durch die Messung der Energie oder der Gesamtleistung $N_{i-1,i}$ und $N_{i,i+1}$ der Impulse, die von Luftspalten am Eingang und Ausgang des i-ten Lichtleiters und am Eingang des letzten Lichtleiters (7) reflektiert werden, sowie durch die Reflexion von der Stirnseite des letzten Lichtleiters (7) und durch die separate Ermittlung der optischen Verluste ($\mu_i$, $\mu_k$) pro Längeneinheit jeweils des beliebigen nicht letzten und des letzten Lichtleiters ermittelt.

*FIG.*

EP 0 380 800 A2

## Verfahren zur Ermittlung optischer Verluste in gekoppelten Lichtleitern im reflektierten Licht

### ANWENDUNGSGEBIET DER ERFINDUNG

Die Erfindung bezieht sich auf das Gebiet der Faseroptik und kann zur Ermittlung des Strahlungsschwächungskoeffizienten in einzelnen Lichtleitern, die in Verbindungsleitungen und -netzen angekoppelt sind, angewendet werden.

### CHARAKTERISTIK DER BEKANNTEN TECHNISCHEN LÖSUNGEN

Es ist ein Verfahren zur Ermittlung von optischen Verlusten in Faserlichtleitern bei sich in Rückrichtung ausbreitender Strahlung bekannt, das in der Einkopplung eines Licht-Sendeimpulses, der Messung der Leistung der Impulse, die durch den Kern des Lichtleiters gestreut sind und sich in der Rückrichtung verbreiten, in der Ermittlung optischer Verluste in einem Lichtleiter nach dem Verhältnis von Amplituden der Impulse, die durch in einem Abstand $\Delta$ 1 voneinander angeordnete Lichtleiterzonen gestreut sind, besteht (s. Schicketanz D., Theorie von Messungen nach dem Verfahren der Rückstreuung in Lichtleitern, - zarubeshnaja elektronika (ausländische Elektronik), 1981, Nr. 6, S. 87 bis 94).

Der Nachteil des bekannten Verfahrens besteht in einem geringen dynamischen Meßbereich, welcher durch ein schwaches Streuungsniveau im Vergleich zu dem von den Stirnseiten reflektierten Niveau bedingt ist. Deshalb ist es unmöglich, lange Leitungen zu messen und die Verluste im ganzen Lichtleiter wegen empfangstoter Zonen in der Nähe der Stirnseiten infolge Reflexionsspitzen von den Eingangs- und Ausgangsstirnseiten der Lichtleiter zu ermitteln.

Es ist ein Verfahren zur Messung von optischen Verlusten in Lichtleitfasern im reflektierten Licht bekannt, das in der Einkopplung eines Strahlungs-Sendeimpulses in den zu messenden Lichtleiter über einen Leerlauflichtleiter, dessen Länge die Hälfte der Länge der eingestellten Modenverteilung für diesen Typ der Lichtleiter beträgt, in der Messung der Energie N 1 des Impulses, der von der Ausgangsstirnseite des Leerlauflichtleiters reflektiert ist, in der Messung der Energie N 2 des Impulses, der von den mit einem Luftspalt angekoppelten Stirnseiten des Leerlauf-und des zu messenden Lichtleiters reflektiert ist, der Messung der Energie N 3 des Impulses, der von der Ausgangsstirnseite des zu messenden Lichtleiters reflektiert ist, sowie in der Ermittlung von optischen Verlusten pro Längeneinheit des zu messenden Lichtleiters nach den Ergebnissen dieser drei Messungen besteht (s. die Anmeldung Nr. 4204727 (UdSSR); Erteilungsbeschluß vom 30. 05. 88). Dieses Verfahren ist der dem erfindungsgemäßen Verfahren nächstkommende Stand der Technik.

Der Nachteil des bekannten Verfahrens besteht darin, daß es erforderlich ist, die Lichtleiter zuerst zu trennen, um die Impulse, die von den Ausgangsstirnseiten des Leerlaufs- und des zu messenden Lichtleiters reflektiert sind, messen zu können. Deshalb ist es unmöglich, die Verluste in gekoppelten und in einem optischen Verbindungspfad gelegenen Lichtleitern zu ermitteln.

Die Aufgabe der Erfindung ist es, die Meßgenauigkeit und Vielseitigkeit eines Verfahrens zur Ermittlung optischer Verluste in gekoppelten Lichtleitern zu verbessern, wobei die Verluste in einem beliebigen Lichtleiter i aus den in einem optischen Übertragungsweg gekoppelten k-Lichtleitern ohne deren Trennung ermittelt werden sollen.

### DARLEGUNG DES WESENS DER ERFINDUNG

Diese Aufgabe wird dadurch gelöst, daß das Verfahren zur Messung von optischen Verlusten in Lichtleitfasern im reflektierten Licht, welches die Einkopplung der Impulse der Sendestrahlung in zu messende Lichtleiter über einen Leerlauflichtleiter, die Messung der Energie oder der Gesamtleistung $N_o$ von Impulsen, die von den unter Einhaltung eines minimalen Luftspalts gekoppelten Stirnseiten des Leerlauflichtleiters und des zu messenden Lichtleiters reflektiert werden sowie die Ermittlung von optischen Verlusten $\mu$ pro Längeneinheit des zu messenden Lichtleiters aufweist, erfindungsgemäß dadurch gekennzeichnet ist, daß nach der Messung der Energie oder der Gesamtleistung $N_o$ der reflektierten Impulse, ohne die Leiterleiter zu trennen, die Energie oder die Gesamtleistung $N_{i-1,i}$ und $N_{i,i+1}$ der Impulse, die von den Luftspalten am Eingang und Ausgang des i-ten Lichtleiters reflektiert sind, gemessen; weiterhin die Energie oder die Gesamtleistung $N_{k-1,k}$ und $N_k$ der Impulse, die jeweils vom Luftspalt am Eingang des letzten k-ten Lichtleiters und von dessen Ausgangsstirnseite reflektiert werden, gemessen werden, und daß die optischen

Verluste $\mu_i$ pro Längeneinheit des i-ten zu messenden Lichtleiters mit Ausnahme des letzten Lichtleiters nach der Beziehung

$$\mu_i = \frac{\ell n N_{i-1,i} - \ell n N_{i,i+1} + 2\ell n\left[2n/(n^2+1)\right]}{2\ell_i} \qquad (1)$$

ermittelt wurden, worin $\ell_i$ die Länge des zu messenden i-ten Lichtleiters, $0 \leq i \leq k$ die Nummer (Laufzahl) des zu messenden Lichtleiters; $0$ die Nummer des Leerlauflichtleiters, n der Gruppenbrechungskoeffizient der Lichtleiterkerne bedeuten, und die optischen Verluste $\mu_k$ pro Längeneinheit des letzten (k-ten) Lichtleiters gemäß der Beziehung

$$\mu_k = \frac{\ell n N_{k-1,k} - \ell n N_k + 2\ell n 2_n - \ell n(n^2+1) - 2\ell n(n+1)}{2\ell_k} \qquad (2)$$

ermittelt werden, wobei $\ell_k$ die Länge des letzten (k-ten) Lichtleiters der Übertragungsleitung ist.

Eine Vergleichsanalyse der erfindungsgemäßen Lösung mit dem nächstkommenden Stand der Technik zeigt, daß sich das anmeldungsgemäße Verfahren von dem bekannten Verfahren dadurch unterscheidet, daß nach der Messung der Energie oder der Gesamtleistung $N_0$ die Energie oder die Gesamtleistung $N_{i-1,i}$ und $N_{1,i+1}$ der Impulse, die vom Luftspalt am Eingang und Ausgang des i-ten Lichtleiters reflektiert sind, sowie die Energie oder die Gesamtleistung $N_{k-1,k}$ und $N_k$ der Impulse, die vom Luftspalt am Eingang des letzten (k-ten) Lichtleiters und von seiner Ausgangsstirnseite reflektiert sind, ohne diese dabei zu trennen, gemessen werden, während die optischen Verluste $\mu_i$ und $\mu_k$ pro Längeneinheit jeweils des i-ten und des k-ten Lichtleiters nach den Beziehungen (1) und (2) ermittelt werden.

Das anmeldungsgemäße Verfahren enthält folgende zusammenhängende Verfahrensschritte:

1. Man koppelt die zu messenden k Lichtleiter miteinander und mit dem Leerlauflichtleiter unter Einhaltung eines minimalen Luftspalts;

2. Man führt in die aneinandergekoppelten Lichtleiter der Übertragungsleitung einen Strahlungs-Sendeimpuls über den Leerlauflichtleiter ein;

3,4. Man mißt nacheinander die Energie oder die Gesamtleistung $N_{i-1,i}$ und $N_{1,i+1}$ der Impulse, die jeweils von den Luftspalten am Eingang und Ausgang des zu messenden i-ten Lichtleiters mit Ausnahme des letzten Lichtleiters reflektiert sind;

5,6. Man mißt nacheinander die Energie oder die Gesamtleistung $N_{k-1,k}$ und $N_k$ der Impulse, die jeweils vom Luftspalt am Eingang des letzten (k-ten) Lichtleiters und von seiner Ausgangsstirnseite reflektiert sind;

7. Man ermittelt die optischen Verluste $\mu_i$ und $\mu_k$ pro Längeneinheit des beliebigen i-ten und des letzten Lichtleiters nach den Beziehungen (1) und (2).

Der Vorteil des erfindungsgemäßen Verfahrens besteht darin, daß die optischen Verluste im beliebigen Lichtleiter aus den in einer Übertragungsleitung aneinandergekoppelten Lichtleitern, darunter auch in einer arbeitenden Übertragungsleitung ohne Zutritt zu diesen Lichtleitern selbst oder deren Trennung und nachfolgende erneute Verbindung ermittelt werden können, wodurch der Meßprozeß wesentlich erleichtert wird. Dabei erhöht sich wesentlich durch die Messung des von den Stirnseiten der Lichtleiter reflektierten Lichts der dynamische Meßbereich, der bei der Anwendung von Reflektometern durch eine schwache Streuung in hochwertigen Lichtleitern begrenzt wird; dadurch entsteht die Möglichkeit, auch lange Übertragungsleitungen zu sondieren, wenn es erforderlich ist, nur zu einer Eingangsstirnseite des ersten Lichtleiters, der mit dem Leerlauflichtleiter angekoppelt ist, zu kommen.

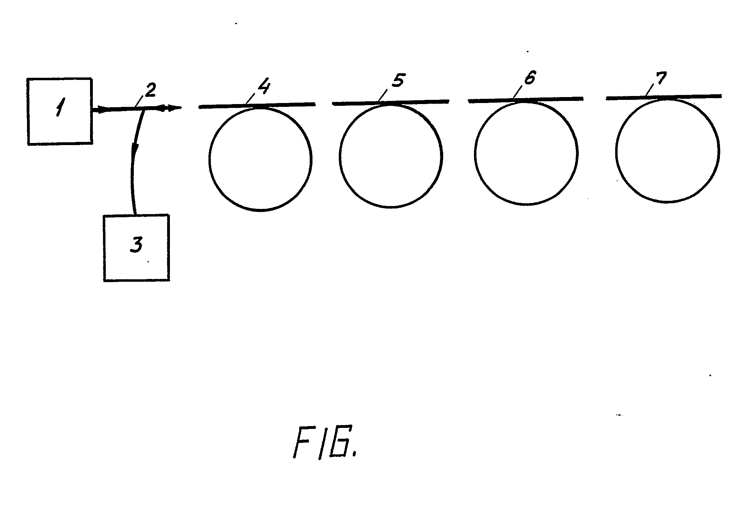

KURZBESCHREIBUNG DER ZEICHNUNG

Die einzige Figur zeigt eine Vorrichtung zur Durchführung des Meßverfahrens. Die Vorrichtung enthält eine Strahlungsquelle 1, einen Strahlteiler (Verzweiger) 2 zur Aufteilung der einfallenden und der reflektierten Strahlung, einen Empfänger 3, einen Leerlauflichtleiter 4, den ersten zu messenden Lichtleiter 5, einen frei gewählten i-ten Lichtleiter 6, den letzten mit einem minimalen Luftspalt angekoppelten Lichtleiter 7.

BEVORZUGTE AUSFÜHRUNGSFORM DER ERFINDUNG

Das Verfahren wird folgenderweise realisiert.

Ein Einzelimpuls oder ein Impulspaket mit einer bestimmten Anfangsenergie oder Gesamtleistung wird über einen optischen Verzweiger 2 in einen Leerlauflichtleiter 4 und weiter in die mit diesem mit minimalen Luftspalten angekoppelten restlichen Lichtleiter 5 - 7 eingekoppelt. Mittels eines Empfängers 3, der die Zeitverzögerung zwischen den Zeitpunkten des Sendeimpulses und den des Empfangs der reflektierten Impulse regelt, mißt man die Energie oder die Gesamtleistung $N_o$ der Impulse, die vom Luftspalt zwischen der angekoppelten Ausgangsstirnseite des Leerlauflichtleiters und der Eingangsstirnseite des ersten zu messenden Lichtleiters reflektiert werden.

Das Signal des Empfängers 3 beträgt dabei:

$$N_o = x\phi\tau_2^2 \exp(-2\mu_o\ell_o)[\rho + (1-\rho)^2\rho + (1-\rho)^2\rho^3 + ...] = x\phi\tau_2^2 \exp(-2\mu_o\ell_o)(\frac{2\vartheta}{1+\vartheta}) \qquad (3)$$

worin $x$ ein Proportionalitätskoeffizient, der durch die Empfindlichkeit des Empfängers 3 bestimmt ist, $\tau_2$ der Durchlaßgrad des Verzweigers 2, $\mu_o$ der Schwächungskoeffizient pro Längeneinheit des Leerlauflichtleiters, $\ell_o$ seine Länge und $\rho$ der Reflexionsgrad der Stirnseite der Lichtleiter sind; und $\phi$ den Strom, die Leistung oder die Strahlungsenergie der Quelle angibt.

Nach der Änderung der Zeitverzögerung, ohne daß dabei in der Folge der aneinandergekoppelten Lichtleiter 4 bis 7 etwas geändert wird, wird die Energie oder die Gesamtleistung $N_{1,2}$ der Impulse, die vom Luftspalt am Ausgang des ersten zu messenden Lichtleiters reflektiert sind, nach der Beziehung

$$N_{1,2} = k\phi\tau_2^2 \exp(-2\mu_o\ell_o)(\frac{1-\vartheta}{1+\vartheta})^2 \exp(-2\mu_1\ell_1)(\frac{2\vartheta}{1+\vartheta}) =$$

$$\qquad (4)$$

$$= k\phi\tau_2^2 \exp(-2\mu_o\ell_o)(\frac{2n}{n^2+1})^2 \exp(-2\mu_1\ell_1)(\frac{2\vartheta}{1+\vartheta}),$$

gemessen, worin n den Gruppenbrechungskoeffizient des Lichtleiterkerns; $\mu_1$ den Schwächungskoeffizienten pro Längeneinheit des ersten zu messenden Lichtleiters und $\ell_1$ dessen Länge angeben. In diesem Fall hat man die Bedeutung des Quadrats des Durchlaßgrades des Luftspalts zwischen den angekoppelten Stirnseiten der Lichtleiter $(2n/n^2 + 1)^2$ unter Berücksichtigung der Gleichung $\rho = [(n-1)/(n+1)]^2$ bekommen.

Besteht die Notwendigkeit, optische Verluste pro Längeneinheit eines frei gewählten i-ten Lichtleiters der Übertragungsleitung zu ermitteln, mißt man die Energie bzw. die Gesamtleistung der Impulse des von Luftspalten am Eingang und Ausgang reflektierten Lichts.

Dabei wird die Beziehung (3) in

$$N_{i-1,i} = x\phi\tau_{\Sigma(i-1)}^2 (\frac{2\vartheta}{1+\vartheta}), \qquad (5)$$

transformiert, während der Ausdruck (4) in

$$N_{i,i+1} = k\phi\tau_{\Sigma(i-1)}^2 (\frac{2n}{n^2+1})\exp(-2\mu_i\ell_i)(\frac{2\vartheta}{1+\vartheta}) \qquad (6)$$

transformiert wird, worin $\tau_{\Sigma(i-1)}^2$ das Quadrat des Summendurchlaßgrades der gesamten Lichtleiter, die in der Übertragungsleitung bis zum i-ten Lichtleiter angeordnet sind, ist.

Wenn die optischen Verluste pro Längeneinheit des letzten Lichtleiters k gemessen werden sollen, wird das Signal $N_{k-1,k}$ analog der Beziehung (5) gemessen.

Anhand der Beziehung

$$N_{k-1,i} = x\phi\tau_{\Sigma(k-1)}^2 (\frac{2\vartheta}{1+\vartheta}) \qquad (7)$$

wird dann das Signal, das von einer Ausgangsstirnseite des k-ten Lichtleiters bedingt ist, nach der Beziehung

4

$$N_k = K\phi \tau^2_{\underline{\nless}}(k-1)(\frac{1-\mathcal{S}}{1+\mathcal{S}})^2 \big[ \exp(-2\mu_k \ell_k)\mathcal{S} =$$

$$K\phi \tau^2_{\underline{\nless}}(k-1)(\frac{2n}{n^2+1})^2 \big[ \exp(-2\mu_k \ell_k)\big]\mathcal{S} \, , \qquad (8)$$

gemessen, worin $\mu_k$, $\ell_k$ jeweils die optischen Verluste pro Längeneinheit und die Länge des k-ten Lichtleiters angeben.

Da der Leerlauflichtleiter dem nullten Lichtleiter und der Ausdruck (3) der Gleichung (5) bei L = 1 und L-1 = 0 äquivalent sind, während der Ausdruck (4) der Gleichung (6) bei i-$L$ äquivalent ist, werden die optischen Verluste in einem frei gewählten (einschließlich dem ersten) aber nicht im letzten Lichtleiter der Folge der Lichtleiter aus dem Verhältnis der Ausdrücke (5) und (6)

$$\mu_i = \frac{\ell n N_{i-1,i} - \ell n N_{i,i+1} + 2\ell n \big[ 2n/(n^2+1)\big]}{2\ell_i} \qquad (9)$$

ermittelt, während die optischen Verluste im letzten Lichtleiter der Übertragungsleitung aus dem Verhältnis der Ausdrücke (6) und (8)

$$\mu_k = \frac{\ell n N_{k-1,k} - \ell n N_k + 2\ell n2n - \ell n(n^2+1)-2\ell n(n+1)}{2\ell_k} \qquad (10)$$

ermittelt werden.

Der Ausdruck (10) ergibt sich durch Logarithmieren des Verhältnisses

$$\frac{N_k}{N_{k-1,k}} = \exp(-2\mu_k\ell_k)\left[\frac{(1-\mathcal{S})^2}{2(1+\mathcal{S})}\right] = \exp(-2\mu_k\ell_k)\frac{(2n)^2}{(n^2+1)(n+1)^2}$$

Die Genauigkeit bei der Durchführung der Messungen nach dem vorgeschlagenen Verfahren sowie die Vergrößerung des dynamischen Meßbereichs bei der Messung der Verluste pro Längeneinheit des entfernten Lichtleiters wird dadurch erreicht, daß es zum einen nicht erforderlich ist, die Lichtleiter während der Messungen zusammen- oder auseinanderzukoppeln, das heißt, ein Fehler, der mit der möglichen Dejustierung der angekoppelten Lichtleiter verbunden ist, wird vermieden; und daß zum anderen die zu messenden Verluste mit den realen Verlusten in der zu sondierenden Leitung identisch sind sowie dadurch, daß das Signal, das durch die Strahlung an den Luftspalten bedingt ist, das Signal, welches von der einzelnen Stirnseite reflektiert ist, praktisch um das zweifache (um das $2/(1 + \rho)$-fache) übertrifft und gegenüber dem Rückstreuungssignal bedeutend höher ist. Damit wird die Meßgenauigkeit bei dem zu registrierenden Rückstrahlungssignal und dementsprechend die Sendeweite in der Übertragungsleitung mit den aneinandergekoppelten Lichtleitern erhöht.

## INDUSTRIELLE ANWENDBARKEIT

Die vorliegende Erfindung kann im Bau und der Montage von Hauptverbindungsnetzen, bei deren Renovierung und vorbeugender Wartung sowie in technologischen Prozessen bei der Herstellung von Produkten der Faseroptik angewendet werden.

**Ansprüche**

Verfahren zur Ermittlung optischer Verluste in gekoppelten Lichtleitern im reflektierten Licht, mit den Schritten:

Einkoppeln eines Strahlungs-Sendeimpulses oder einer Impulsgruppe in die zu messenden Lichtleiter über einen Leerlauflichtleiter;

Messung der Energie oder der Gesamtleistung $N_o$ der Impulse, die von unter Einhaltung eines minimalen Luftspalts aneinandergekoppelten Stirnseiten des Leerlauflichtleiters und des zu messenden Lichtleiters reflektiert sind; und

Ermittlung von optischen Verlusten pro Längeneinheit des zu messenden Lichtleiters,

**dadurch gekennzeichnet, daß**

im beliebigen i-ten Lichtleiter aus den in Form einer optischen Übertragungsleitung aneinandergekoppelten k-ten Lichtleitern, ohne diese auseinanderzutrennen, die Energie oder die Gesamtleistung $N_{i-1,i}$ und $N_{i,i+1}$ der Impulse, die jeweils von den Luftspalten am Eingang und Ausgang des i-ten Lichtleiters reflektiert sind, gemessen,

die Energie oder die Gesamtleistung $N_{k-1,k}$ und $N_k$ der Impulse, die jeweils vom Luftspalt am Eingang des letzten (k-ten) Lichtleiters und von seiner Ausgangsstirnseite reflektiert sind, gemessen, und die optischen Verluste $\mu_i$ pro Längeneinheit jeweils des nicht letzten zu messenden (i-ten) Lichtleiters und des letzten zu messenden (k-ten) Lichtleiters nach den Beziehungen

$$\mu_i = \frac{\ell n N_{i-1,i} - \ell n N_{i,i+1} + 2\ell n \left[ 2n/(n^2+1) \right]}{2\ell_i} \quad ;$$

$$\mu_k = \frac{\ell n N_{k-1,k} - \ell n N_k + 2\ell n 2n - \ell n(n^2+1) - 2\ell n(n+1)}{2\ell_k}$$

ermittelt werden, worin $\ell_k$ die Länge des letzten Lichtleiters der Linie, $\ell_i$ die Länge des i-ten Lichtleiters; $0 \leq i < k$ die Nummer (Laufzahl) des zu messenden Lichtleiters; 0 die Nummer (Laufzahl) des Leerlauflichtleiters und n den Gruppenbrechungsindex der Lichtleiterkerne angeben.

EP 0 380 800 A2

FIG.